# EUROPÄISCHE PATENTANMELDUNG

(11) **EP 1 759 835 A2**
(43) Veröffentlichungstag der Anmeldung: **07.03.2007**
(21) Anmeldenummer: 06016181.7
(22) Anmeldetag: 03.08.2006
(51) Int. Cl.: B32B 37/20, B32B 37/15, B32B 15/08

(54) **Verfahren zur Herstellung eines Polymer-Metall-Koextrudats und Polymer-Metall-Koextrudat, sowie Herstellvorrichtung**

(30) Priorität: 06.09.2005 DE 102005042167
(71) Anmelder: REHAU AG + Co, 95111 Rehau (DE)
(72) Erfinder: Görmer, Lutz, 95111 Rehau (DE)

(57) **Zusammenfassung**

Das Verfahren zur Herstellung eines Polymer-Metall-Koextrudats (2), bestehend aus einem ersten Polymermaterial und mindestens zwei zueinander beabstandet angeordneten Metallfolien (4, 6) und einem zweiten Polymermaterial, das zwischen diesen Metallfolien (4, 6) liegt, wobei mit einer ersten Transporteinrichtung (7) zum Transport eine Substratbahn (3) aus dem ersten Polymermaterial längs einer ersten Transportrichtung (8), mit einer zweiten Transporteinrichtung (9) zum Transport eine erste Metallfolie (4) längs einer zweiten Transportrichtung (10), mit einer dritten Transporteinrichtung (11) zum Transport eine zweite Metallfolie (6) längs einer dritten Transportrichtung (12), mit einer Andrückeinrichtung (20) zum Andrücken, wobei Substratbahn (3) und Metallfolien (4, 6) ab der Andrückeinrichtung (20) längs einer gemeinsamen Transportrichtung (16) transportiert werden, welches sich dadurch auszeichnet, dass mit einer vierten Transporteinrichtung (13) zum Transport eine Polymerfolie (5) aus dem zweiten Polymermaterial derart zugeführt wird, dass diese zwischen die erste (4) und zweite Metallfolie (6) eingebracht wird, wobei innerhalb der Zusammenführeinrichtung (19) mittels der Andrückeinrichtung (20) Substratbahn (3), erste Metallfolie (4), Polymerfolie (5) und zweite Metallfolie (6) haftend miteinander verbunden werden, wird genannt.

## Beschreibung

Die Erfindung betrifft ein Verfahren zur Herstellung eines Polymer-Metall-Koextrudats,
- wobei eine Substratbahn längs einer Transportrichtung,
- eine erste Metallfolienbahn längs einer Transportrichtung,
- eine zweite Metallfolienbahn längs einer Transportrichtung,
- unter Zusammenführen einer Substratbahn und einer ersten und einer zweiten Metallfolienbahn
- und Verbinden in einem Koextrusionswerkzeug, wobei diese Bahnen ab einem Verbindungsbereich längs einer gemeinsamen Transportrichtung transportiert werden, geleitet werden
und ein derart hergestelltes Polymer-Metall-Koextrudat, sowie eine Vorrichtung zur Herstellung.

Polymer-Metall-Koextrudate sind durch offenkundige Vorbenutzung bekannt.

Diese Koextrudate werden in vielfältigen Anwendungen eingesetzt, beispielsweise als Zierleisten an Automobilen, als Wandanschlussprofile und im technischen Bereich als Abdeckprofile unterschiedlichster Gestaltung.

Ausgestaltungen solcher Polymer-Metall-Koextrudate, die zwei oder mehr Metallfolien im Profil angeordnet aufweisen, sind bekannt.

Diese Lösung wird immer dann herangezogen, wenn komplexe Querschnitte der Extrudate anwendungsbedingt mit entsprechend komplex geformten Metallfolien zu versehen sind. Das Einbringen der verformten Metallfolien in die Polymermatrix des Profiles ist dabei nicht einfach.

Dazu wird der Weg gewählt, zwei oder mehrere Folien, die im allgemeinen derart rollverformt sind, dass sie dem komplexen Querschnitt entsprechen, dem sie bei der Koextrusion zugeordnet werden, einem Koextrusionswerkzeug zulaufen zu lassen, in dem sie mit Polymermaterial umspritzt werden.

Diese Polymer-Metall-Koextrudate zeigen vorteilhafterweise ein im Vergleich zu Polymerprofilen ohne Metalleinlage deutlich reduziertes Ausdehnungsverhalten in der Wärme und besitzen eine durch die Metalleinlage verursachte Steifigkeit, die sich bei manchen Anwendungen günstig nutzen lässt.

Auch dient die Metalleinlage zur Stabilisierung der Raumform des Profils.

Nachteilig bei diesen Polymer-Metall-Koextrudaten ist die Tatsache, dass die Metallfolien in vielen Fällen nicht durch den Koextrusionsprozess derart miteinander verbunden werden können, dass sie im Polymer-Metall-Koextrudat lagedefiniert angeordnet sind.

Insbesondere wenn der Abstand zwischen den zwei Metallfolien klein ist, gelingt es im Koextrusionsprozess nicht, Polymermaterial in den Spalt zwischen den zueinander beanstandeten Folien einzubringen und damit einen Verbund der Folien herzustellen. Dies kann zu Maßhaltigkeitsschwankungen, Verlagerung der Metallfolien im Profil, damit zu Unregelmäßigkeiten in der Fertigung und folglich zu Ausschuss führen, weil der Verbund der Folien nicht gewährleistet ist.

Man behilft sich bei solchen Problemen oft mit einer Temperaturabsenkung der Schmelze des Polymermaterials, was aber zu einer reduzierten, wirtschaftlich nicht akzeptablen Fertigungsgeschwindigkeit führt und andere Probleme mit sich bringt.

Es ist deshalb herstellungsbedingt nur in sehr limitiertem Umfang möglich, in komplexe Profilquerschnitte zwei und mehr Metallfolien definiert einzubringen. Dies führt dazu, dass andere, insbesondere aufwendigere und kostentreibende technische Lösungen zur Umgehung dieser Limitierung notwendig sind.

Es ist daher eine Aufgabe der vorliegenden Erfindung, ein Verfahren zur Herstellung derartiger Polymer-Metall-Koextrudate anzugeben, die zwei oder mehr Metallfolien im Profil aufweisen und die genannten Nachteile des Standes der Technik überwinden. Eine weitere Aufgabe der vorliegenden Erfindung besteht darin, Polymer-Metall-Koextrudate anzugeben, die einfach, prozesssicher und kostengünstig herstellbar sind und eine Herstellvorrichtung dafür.

Diese Aufgabe ist erfindungsgemäß gelöst durch ein Verfahren zur Herstellung derartiger Polymer-Metall-Koextrudate gemäß Patentanspruch 1 und ein derartiges Polymer-Metall-Koextrudat nach Anspruch 9, sowie eine Herstellvorrichtung dafür gemäß Patentanspruch 18.

Erfindungsgemäß wurde erkannt, dass die Verbindung der Metallfolien im Profil aus Polymermaterial vorteilhaft erreicht werden kann, indem eine Folie aus Polymermaterial zwischen den zwei Metallfolien mit in das Koextrusionswerkzeug einläuft und so die zwei Metallfolien sicher verbindet.

Es resultiert so ein Verfahren zur Herstellung von Polymer-Metall-Koextrudaten, bei dem stets eine ausreichende Verbindung zwischen den zwei Metallfolien sichergestellt ist. Der oben geschilderte Nachteil, dass kein Polymermaterial in einen insbesondere sehr engen Spalt zwischen zwei Metallfolien im Zuge der Herstellung im Koextrusionsverfahren eingebracht werden kann, wird so gänzlich beseitigt.

Es ist dabei besonders vorteilhaft, wenn die Substratbahn, die erste Metallfolie, die Polymerfolie und die zweite Metallfolie mit der gleichen Geschwindigkeit transportiert werden.

Auf Grund der häufig komplexen Geometrien, die bei den erfindungsgemäßen Polymer-Metall-Koextrudaten benötigt werden, sind die Metallfolien rollverformt, um die gewünschte Raumform des Koextrudats herstellen zu können.

Die Rollverformung findet dabei besonders vorteilhaft unmittelbar vor dem Zusammenführen mit weiteren Folien zur Bildung des Polymer-Metall-Koextrudats statt.

Es ist von Vorteil, wenn die Bahn und / oder Folien vor dem Zusammenführen aktiviert werden, weil dadurch eine verbesserte Haftung zwischen den Schichten des Polymer-Metall-Koextrudats erreicht werden kann. Die Aktivierung kann mittels Flamme und / oder Coronaentladung und / oder Plasmaeinwirkung und / oder Fluorierung und / oder Oberflächenoxidation und / oder Oberflächenätzung und / oder Oberflächenbeizung durchgeführt werden.

Es ist auch möglich, für die Bahn und / oder Folien einen oberflächlichen Auftrag eines Haftvermittlers vorzusehen, um damit eine verbesserte Haftung zu erreichen.

Die Vorrichtung zur Herstellung eines Polymer-Metall-Koextrudats kann dabei in einer komplexe Fertigungsstrecke für derartige Artikel integriert sein.

Vorteilhaft ist die Vorrichtung dabei so angeordnet, dass sie eine Substratbahn aufnimmt, die ein Extruder mittels eines Werkzeuges formt und abgibt.

Besonders vorteilhaft wird die Vorrichtung nahe dem Werkzeug oder als nachgeschalteter Bestandteil des Werkzeuges angeordnet, da hierbei die Fertigung der erfindungsgemäßen Polymer-Metall-Koextrudate wesentlich erleichtert wird.

In diesem Fall ist das Extrusionswerkzeug so ausgelegt, dass die Substratbahn aus dem plastifizierten ersten Polymermaterial geformt wird, diese dann unmittelbar mit der ersten Metallfolie, der Polymerfolie und der zweiten Metallfolie verbunden wird. Herbei kann auch vorteilhaft das erste Polymermaterial noch so eingesetzt werden, dass es die erste Metallfolie, die Polymerfolie und die zweite Metallfolie vollständig bedeckt.

Hierdurch kann ein Polymer-Metall-Koextrudat hergestellt werden, das gegen äußere Einflüsse besonders widerstandsfähig ist, da durch die Schicht aus dem ersten Polymermaterial darunter liegende Metallfolien besonders gut gegen bsplw. Witterungseinflüsse oder mechanische Beschädigungen, wie Verkratzungen, etc. geschützt sind.

Es ist aber auch möglich, die Vorrichtung zur Herstellung von Polymer-Metall-Koextrudate unabhängig von einem vorhandenen Extruder einzusetzen und beispielsweise die Substratbahn als Rollenware zu verwenden. In diesem Falle kann bsplw. die Substratbahn leicht gewechselt werden, so dass ein hoher Grad an Flexibilität in der Fertigung derartiger Gegenstände erreicht werden kann.

Die Andrückeinrichtung kann einen Andrückmittel aufweisen, das mit einem vorgegebenen Druck auf die Bahn und die Folien im Andrückbereich wirkt.

Über das Zusammenspiel des mittels des Andrückmittels ausgeübten Drucks einerseits und der Geschwindigkeit, mit der das Polymer-Metall-Koextrudat durch die Vorrichtung bewegt wird, andererseits kann die Festigkeit des Verbundes aus Substratbahn, erster Metallfolie, Polymerfolie und zweiter Metallfolie vorgegeben werden.

Mit dem Andrückmittel kann z.B. ein Druck der Andrückeinrichtung im Andrückbereich fest vorgegeben werden.

Vor der Zusammenführeinrichtung kann eine Haftvermittler-Auftragseinrichtung an der vierten Transporteinrichtung zum Transport der Polymerfolie angeordnet sein. Mit Hilfe eines derartigen Haftvermittlerauftrags lässt sich die Haftung der verschiedenen Folie aneinander verbessern.

Es können auch Aktivierungseinrichtungen vorgesehen sein, die den Transporteinrichtungen für die erste und / oder zweite Metallfolie und / oder Polymerfolie zugeordnet sind. Durch eine Aktivierung der Folien kann die Haftung der Folien untereinander und zur Substratbahn vorteilhaft erhöht werden.

Als Aktivierungstechniken sind hierbei bekannt: Flammenbehandlung und / oder Coronaentladung und / oder Plasmaeinwirkung und / oder Fluorierung und / oder Oberflächenoxidation und / oder Oberflächenätzung und / oder Oberflächenbeizung.

Die Metallfolien können aber auch mit einer oberflächlich aufgebrachten Schicht eines Haftvermittlers ausgerüstet sein und so eine besonders hohe Haftung zur Polymerfolie ausbilden.

Das nach dem erfindungsgemäßen Verfahren hergestellte Polymer-Metall-Koextrudat kann so aufgebaut sein, dass das erste Polymermaterial, aus dem die Substratbahn besteht, gleich dem Polymermaterial der Polymerfolie ist.

Diese Lösung ist besonders vorteilhaft unter Recycling-Gesichtspunkten.

In einer anderen Ausführungsform kann aber auch vorgesehen sein, dass sich erstes und zweites Polymermaterial voneinander unterscheiden.

Besonders günstige Hafteigenschaften werden erreicht, wenn die Metallfolien einen oberflächlich aufgebrachten Haftvermittler aufweist, der die Haftung zu der Polymerfolie sicherstellt.

Die Polymerfolie kann einen Mehrschichtaufbau aufweisen, also aus mehreren Schichten unterschiedlicher Polymere zusammengesetzt sein, auch ein Sandwich-Aufbau der Polymerfolie ist erfindungsgemäß möglich.

Die Dicke der Polymerfolie beträgt 0,1 bis 5 mm, bevorzugt 0,1 bis 2 mm und besonders bevorzugt 0,15 bis 1,5 mm.

Verwendung finden die erfindungsgemäßen Polymer-Metall-Koextrudate als Zierleisten an Automobilen, als Wandanschlussprofile und im technischen Bereich als Abdeckprofile.

Ein Ausführungsbeispiel der Erfindung wird nachfolgend anhand der Zeichnung näher erläutert.
- Fig. 1: zeigt schematisch eine Seitenansicht einer Vorrichtung zur Herstellung eines Polymer-Metall-Koextrudates;
- Fig. 2: zeigt schematisch einen Querschnitt durch ein Polymer-Metall-Koextrudat.

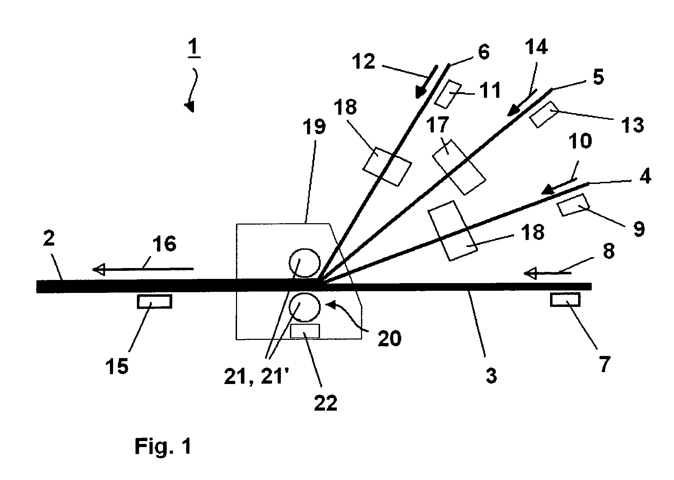

Das erfindungsgemäße Verfahren wird wie folgt Bezug nehmend auf eine schematische Skizze gemäß Fig. 1 durchgeführt:

Eine insgesamt mit 1 bezeichnete Vorrichtung zur Herstellung eines Polymer-Metall-Koextrudats (2) weist eine ersten Transporteinrichtung (7) zum Transport einer Substratbahn (3) aus dem ersten Polymermaterial längs einer ersten Transportrichtung (8), mit einer zweiten Transporteinrichtung (9) zum Transport eine ersten Metallfolie (4) längs einer zweiten Transportrichtung (10), mit einer dritten Transporteinrichtung (11) zum Transport einer zweiten Metallfolie (6) längs einer dritten Transportrichtung (12), mit einer vierten Transporteinrichtung (13) zum Transport einer Polymerfolie (5) aus dem zweiten Polymermaterial, die derart zugeführt wird, dass diese zwischen die erste (4) und zweite Metallfolie (6) eingebracht wird und mit einer Andrückeinrichtung (19) zum Andrücken, wobei Substratbahn (3) und Metallfolien (4, 6) ab der Andrückeinrichtung (20) längs einer gemeinsamen Transportrichtung (16) transportiert werden, wobei innerhalb der Zusammenführeinrichtung (19) mittels der Andrückeinrichtung (20) Substratbahn (3), erste Metallfolie (4), Polymerfolie (5) und zweite Metallfolie (6) haftend miteinander verbunden werden.

Eine schematisch unterhalb des Polymer-Metall-Koextrudats (2) angedeutete gemeinsame Transporteinrichtung (15) dient zum Transport des Polymer-Metall-Koextrudats (2) längs einer gemeinsamen Transportrichtung (16).

In der Zusammenführeinrichtung (19) wird die Substratbahn (3) mit der ersten Metallfolie (4), der Polymerfolie (5) und der zweiten Metallfolie (6) zusammengeführt.

Die Substratbahn (3) wird vor der Zusammenführeinrichtung (19) mittels einer schematisch unter ihr angedeuteten ersten Transporteinrichtung (7) längs einer ersten Transportrichtung (8) transportiert.

Die erste Metallfolie (4) entsprechend mit einer zweiten Transporteinrichtung (9) längs einer zweiten Transportrichtung (10), wobei in der Seitenansicht nach Fig. 1 die beiden Transportrichtungen 8, 10 zueinander einen spitzen Winkel einschließen.

Ebenso werden die Polymerfolie (5) und die zweite Metallfolie (6) durch ihnen jeweils zugeordneten Transporteinrichtungen (11, 13) längs jeweiliger Transportrichtungen (12, 14) transportiert und der Zusammenführeinrichtung (19) zugeleitet.

Für die Polymerfolie (5) ist je nach Notwendigkeit der Auftrag eines Haftvermittlers auf die Oberfläche vorgesehen, hierzu ist eine Haftvermittlerauftragsstation (17) in der Vorrichtung zur Herstellung (1) integriert.

Die Metallfolie (4, 6) können, soweit dies erforderlich ist, oberflächlich aktiviert werden und / oder mit einem Haftvermittler versehen werden, um eine bessere Haftung zum Polymermaterial auszubilden.

Hierzu sind Aktivierungsstationen / Haftvermittlerauftragsstationen (18) in der Herstellvorrichtung (1) vorgesehen.

Substratbahn (3), erste Metallfolie (4), Polymerfolie (5) und zweite Metallfolie (6) können von einer Seite der Zusammenführeinrichtung (19) zugeführt werden.

Ab der Andrückeinrichtung (20) werden die Substratbahn (3), die erste Metallfolie (4), die Polymerfolie (5) und die zweite Metallfolie (6) in haftender Anlage aneinander längs einer gemeinsamen Transportrichtung (16) transportiert.

Die Andrückeinrichtung (20) bildet einen in Transportrichtung (16) nachgelagerten Abschnitt der Zusammenführeinrichtung (19).

Ein Andrückmittel (21) drückt in der Andrückeinrichtung (20) in Fig. 1 von unten das Andrückmittel (21) gegen einen Gegenkörper (21') der Andrückeinrichtung (20).

Das Andrückmittel (21) stützt sich gegen die Andrückeinrichtung (20) über ein Vorspannelement (22), z.B. eine Schraubenfeder, ab.

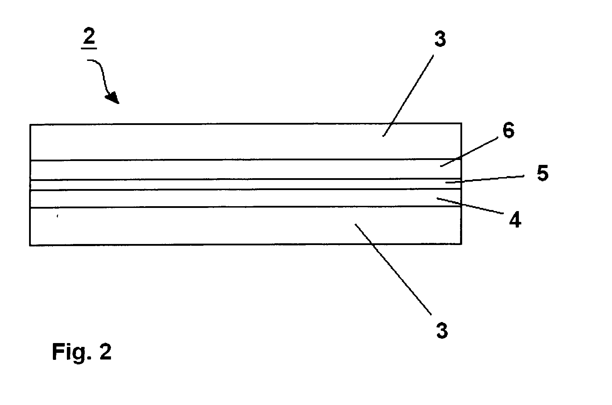

Das mittels des erfindungsgemäßen Verfahrens hergestellte Polymer-Metall-Koextrudat (2) weist dabei einen Aufbau gemäß Fig. 2 auf:

Das mit (2) bezeichnete Polymer-Metall-Koextrudat ist aus einer Substratbahn (3), die aus einem ersten Polymermaterial besteht, einer ersten Metallfolie (4), einer Polymerfolie (5), die aus einem zweiten Polymermaterial besteht und einer zweiten Metallfolie (6) aufgebaut. Sehr vorteilhaft wird das Herstellverfahren so gestaltet, dass das erste Polymermaterial, aus dem die Substratbahn (3) besteht, die beiden Metallfolien (4, 6) und die Polymerfolie (5) vollständig bedeckt.

Dies ist in Fig. 2 mit einer auf die zweite, d. h. "obere" Metallfolie (6) gelegten Schicht (3) aus dem ersten Polymermaterial, aus dem die Substartbahn besteht, angedeutet.

### Ausführungsbeispiel:

Das Polymer-Metall-Koextrudat (2) kann beispielsweise folgendermaßen aufgebaut sein:
Als Substratbahn (3) wird ein Endlosprofil aus Polypropylen eingesetzt.
Als erste Metallfolie (4) wird eine rollverformte Edelstahlfolie einer Stärke von 0,1 mm eingesetzt.
Als Polymerfolie (5) wird eine Polypropylenfolie einer Stärke von 0,2 mm, die beidseitig mit einem Haftvermittler beschichtet ist eingesetzt.

Die zweite Metallfolie (6) ist eine rollverformte Edelstahlfolie einer Stärke von 0,15 mm. Mittels des erfindungsgemäßen Verfahrens ist ein Polymer-Metall-Koextrudat (2), aufgebaut aus Polypropylen und Edelstahl leicht zugänglich, das Polymer-Metall-Koextrudat (2) wird als Zierleiste an einem Automobil eingesetzt.

### Bezugszeichenliste

- 1: Vorrichtung zur Herstellung eines Polymer-Metall-Koextrudats
- 2: Polymer-Metall-Koextrudat
- 3: Substratbahn
- 4: erste Metallfolie
- 5: Polymerfolie
- 6: zweite Metallfolie
- 7: erste Transporteinrichtung
- 8: erste Transportrichtung
- 9: zweite Transporteinrichtung
- 10: zweite Transportrichtung
- 11: dritte Transporteinrichtung
- 12: dritte Transportrichtung
- 13: vierte Transporteinrichtung
- 14: vierte Transportrichtung
- 15: gemeinsame Transporteinrichtung
- 16: gemeinsame Transportrichtung
- 17: Haftvermittlerauftragsstation
- 18: Aktivierungsstation / Haftvermittlerauftragsstation
- 19: Zusammenführeinrichtung
- 20: Andrückeinrichtung
- 21: Andrückmittel / Gegenkörper
- 22: Vorspannelement

## Patentansprüche

1. Verfahren zur Herstellung eines Polymer-Metall-Koextrudats (2), bestehend aus einem ersten Polymermaterial und mindestens zwei zueinander beabstandet angeordneten Metallfolien (4, 6) und einem zweiten Polymermaterial, das zwischen diesen Metallfolien (4, 6) liegt,
wobei
- mit einer ersten Transporteinrichtung (7) zum Transport eine Substratbahn (3) aus dem ersten Polymermaterial längs einer ersten Transportrichtung (8),
- mit einer zweiten Transporteinrichtung (9) zum Transport eine erste Metallfolie (4) längs einer zweiten Transportrichtung (10),
- mit einer dritten Transporteinrichtung (11) zum Transport eine zweite Metallfolie (6) längs einer dritten Transportrichtung (12),
- mit einer Andrückeinrichtung (20) zum Andrücken, wobei Substratbahn (3) und Metallfolien (4, 6) ab einer Andrückeinrichtung (20) längs einer gemeinsamen Transportrichtung (16) transportiert werden,
**dadurch gekennzeichnet, dass**
- mit einer vierten Transporteinrichtung (13) zum Transport eine Polymerfolie (5) aus dem zweiten Polymermaterial derart zugeführt wird, dass diese zwischen die erste (4) und zweite Metallfolie (6) eingebracht wird,
- wobei innerhalb der Zusammenführeinrichtung (19) mittels der Andrückeinrichtung (20) Substratbahn (3), erste Metallfolie (4), Polymerfolie (5) und zweite Metallfolie (6) haftend miteinander verbunden werden.

2. Verfahren nach Anspruch 1, **dadurch gekennzeichnet, dass** die Substratbahn (3), die erste Metallfolie (4), die Polymerfolie (5) und die zweite Metallfolie (6) mit der gleichen Geschwindigkeit transportiert werden.

3. Verfahren nach Anspruch 1 oder 2, **dadurch gekennzeichnet, dass** wenigstens eine Metallfolie (4, 6) vor dem Zusammenführen rollverformt wird.

4. Verfahren nach einem der Ansprüche 1 bis 3, **dadurch gekennzeichnet, dass** wenigstens eine Bahn (3) oder Folie (4, 5, 6) vor dem Zusammenführen an der Oberfläche aktiviert und / oder mit einer Haftvermittlerschicht versehen wird.

5. Verfahren nach Anspruch 4, **dadurch gekennzeichnet, dass** eine Aktivierung mittels Flamme und / oder Coronaentladung und / oder Plasmaeinwirkung und / oder Fluorierung und / oder Oberflächenoxidation und / oder Oberflächenätzung und / oder Oberflächenbeizung durchgeführt wird.

6. Verfahren nach einem der Ansprüche 1 bis 5, **dadurch gekennzeichnet, dass** die Substratbahn (3) in einem Extrusionsprozess hergestellt wird.

7. Verfahren nach einem der Ansprüche 1 bis 6, **dadurch gekennzeichnet, dass** das Zusammenführen von Substratbahn (3), erster Metallfolie (4), Polymerfolie (5) und zweiter Metallfolie (6) derart durchgeführt wird, dass erste Metallfolie (4), Polymerfolie (5) und zweite Metallfolie (6) vollständig von dem ersten Polymermaterial der Substratbahn (3) bedeckt sind.

8. Verfahren nach einem der Ansprüche 1 bis 6, **dadurch gekennzeichnet, dass** Substratbahn (3), erste Metallfolie (4), Polymerfolie (5) und zweite Metallfolie (6) von einer Seite der Zusammenführeinrichtung (19) zugeführt werden.

9. Polymer-Metall-Koextrudat (2), hergestellt nach dem Verfahren nach einem der Ansprüche 1 bis 8.

10. Polymer-Metall-Koextrudat (2) nach Anspruch 9, **dadurch gekennzeichnet, dass** das Polymermaterial der Substratbahn (3) und das Polymermaterial der Polymerfolie (5) gleich sind.

11. Polymer-Metall-Koextrudat (2) nach Anspruch 9, **dadurch gekennzeichnet, dass** das Polymermaterial der Substratbahn (3) und das Polymermaterial der Polymerfolie (5) unterschiedlich sind.

12. Polymer-Metall-Koextrudat (2) nach einem der Ansprüche 9 bis 11, **dadurch gekennzeichnet dass** die Oberfläche der Polymerfolie (5) mit einem Haftvermittler versehen ist.

13. Polymer-Metall-Koextrudat (2) nach Anspruch 9, **dadurch gekennzeichnet dass** die Polymerfolie (5) aus einem Mehrschichtaufbau besteht.

14. Polymer-Metall-Koextrudat (2) nach Anspruch 9, **dadurch gekennzeichnet dass** die Polymerfolie (5) aus einem Sandwich-Aufbau besteht.

15. Polymer-Metall-Koextrudat (2) nach einem der Ansprüche 13 oder 14, **dadurch gekennzeichnet, dass** die Polymerfolie (5) eine Dicke von 0,1 bis 5 mm aufweist.

16. Polymer-Metall-Koextrudat (2) nach Anspruch 15, **dadurch gekennzeichnet, dass** die Polymerfolie (5) bevorzugt eine Dicke von 0,1 bis 2 mm aufweist.

17. Polymer-Metall-Koextrudat (2) nach Anspruch 15 und 16, **dadurch gekennzeichnet, dass** die Polymerfolie (5) ganz besonders bevorzugt eine Dicke von 0,15 bis 1,5 mm aufweist.

18. Vorrichtung (1) zur Herstellung eines Polymer-Metall-Koextrudats (2) gemäß dem Verfahren nach einem der Ansprüche 1 bis 8.

19. Verwendung von Polymer-Metall-Koextrudaten (2) nach einem der Ansprüche 9 bis 17 als Zierleisten an Automobilen, als Wandanschlussprofile und im technischen Bereich als Abdeckprofile.
